# EUROPEAN PATENT APPLICATION

(11) **EP 2 353 806 A1**
(43) Date of publication of application: **10.08.2011**
(21) Application number: 11150669.7
(22) Date of filing: 11.01.2011
(51) Int. Cl.: B26D 1/553, A01J 25/06, B26D 7/26, B26D 1/547

(54) **Cutting wire positioning means**

(30) Priority: 15.01.2010 GB 1000645
(71) Applicant: IMAC Design, Chaffcombe Chard Somerset TA20 4AH (GB)
(72) Inventor: McDonald, Ian, Chard, Somerset TA20 4AH (GB)
(74) Representative: Hands, Lewis Roger

(57) **Abstract**

Harps and harp bases are used for the cutting of dairy products and the like. The invention provides a cutting wire positioning means (130) for use with harps (100) which allow for a variety of shapes and sizes of product to be formed from a block. The cutting wire positioning means (130) includes at least two faces, wherein each of the at least two faces include an array of guide slots (132, 133) through which an at least one cutting wire is passable, the position of the positioning means (130) relative to the harp (100) being adjustable such that each face is selectable for use, in turn, with the at least one cutting wire (126).

## Description

The present invention relates generally to cutting wire positioning means for use with a harp of the type for cutting solid or substantially solid products into predetermined shapes and/or sizes, a harp including such cutting wire positioning means, a harp base, and a method of cutting solid or substantially solid products into predetermined shapes and/or sizes, and finds particular, although not exclusive, utility in the cutting of dairy products such as cheese.

It is known to use harps for the cutting of cheese. These harps comprise at least one cutting wire tensioned across an aperture in a frame. An associated base is used to hold the cheese in place as the cutting wire is moved through it. The base is also known as a pusher or a pushing head, although it will be appreciated that only one of the harp and the base need move during cutting. The base typically includes an array of receiving slots such that, in use, the cutting wire may pass completely through the cheese. Absence of such receiving slots tends to result in poorly cut cheese as the wire is unable to pass completely therethrough.

The known harps typically comprise bolts on either side of the aperture in the frame to hold the wires and to maintain tension therein as they extend across the aperture. Such harps typically include more than one bolt so that the arrangement and position of the wire(s) may be adjusted relative to the frame.

However, these frames typically only provide for a relatively few different arrangements of wire positions and changing a wire position involves removing a bolt to which a wire is attached and repositioning the bolt. This is time consuming and this repositioning exercise can cause damage to the structure. Accordingly, rather than repositioning bolts, a typical cheese cutting facility requires several different harps each having differently positioned wires for producing different shapes and sizes of products. The act of changing or altering the harps at a cheese cutting station is time consuming.

The bases which accompany the frames typically only provide arrangements of receiving slots, for receiving the wires during cutting of the cheese, on one face thereof. Due to the need to have as few receiving slots as possible in one face, to avoid the poor cutting of products, typical cheese cutting facilities require many different harp bases to match with the wire positions/arrangement of the selected harp.

It is desirable, therefore, to provide equipment which allows a greater variety of cutting wire arrangements, and a harp base which will accept a greater variety of wire arrangements.

In a first aspect, the invention provides cutting wire positioning means of the type used as part of a harp for cutting solid or substantially solid products into predetermined shapes and/or sizes, the positioning means for allowing the position of at least one cutting wire relative to the harp to be varied, the positioning means having at least two faces, wherein each of the at least two faces include an array of guide slots through which the at least one cutting wire is passable, the position of the positioning means relative to the harp being adjustable such that each face is selectable for use, in turn, with the at least one cutting wire.

The cutting wire may be attached in some way to the frame of the harp and/or the positioning means to provide tension therein. Means for adjusting the tension may be provided. Such means may be one or more bolts. However, these means do not necessarily act to position the cutting wires. Rather, the guide slots provide this effect.

Each of the guide slots may have a width which is substantially the same as the thickness of the cutting wire. Such cutting wires may have a thickness of 0.1 to 2.5 mm, however, other thicknesses are contemplated. Alternatively, each guide slot may have a width which is greater than approximately four times the thickness of the cutting wire. The former width may allow for the wire to move only in two substantially opposite directions. The latter width may allow for the wire to move in more than these two substantially opposite directions.

The term "array" means one or more slots positioned to achieve a desired shape and size of products when cutting wire(s) are located therein. Each face may be a relatively narrow surface, such as the long thin face on the edge of a steel rule. Alternatively, it may lie across the relatively wider surface of one side of a rectilinear rod. Other shaped positioning means are contemplated as discussed herein.

Each face may include more than one array of guide slots. In this regard, one array may have slots arranged such that they will cut products into one or more particular size and shape, and another array may have slots arranged such that they will cut products into another one or more particular size and shape. For instance, one array may have slots arranged with a spacing of one dimension and another array may have slots arranged with a different spacing. In use, cutting wires may be located in one or more arrays as required to produce products having one or more desired shapes and sizes simultaneously.

In use, the cutting wires may be substantially stationary relative to the harp. In this regard, the wires do not reciprocate or travel through the guide slots in use.

For example, the positioning means may be a rectilinear rod having more than one longitudinal face; each longitudinal face of which may include any number of slots, or none. The slots may be arranged across the whole surface of the face and/or only on the edges where two faces meet. Each face may include more than one array of guide slots.

In one embodiment, the positioning means may be rotatable relative to the harp, in use. Its rotation may be effected by a motor. The rod may have any number of sides (longitudinal faces), for instance, it may have a square longitudinal cross-section having four faces (excluding the ends). Other shapes are contemplated such as triangular, pentagonal, hexagonal, etc. In one embodiment, the cutting wire positioning means is substantially cylindrical. Other non-linear shapes are also contemplated such as oval.

The term "face" may mean a surface which acts to position the cutting wires in use. The face may be brought into use by locating it, relative to the frame, aperture and/or harp, in a defined manner. This will typically be to one side of the aperture in the harp. One face may be exchanged for another by the relocation of the cutting wire positioning means relative to the frame, aperture and/or harp and or by rotation or other such movement thereof. The positioning means may be removably attachable to the harp. This removable attachment may be effected by suitable means provided on each of the frame and the positioning means, such as sockets in the former and pins on the latter.

The positioning means may be an angle bar. In this regard, the term "angle bar" means a substantially "L" shape (in longitudinal cross-section) having two arms. A different set of guide slots may be provided in one or both arms. In use, the angle bar may be removably attachable to a harp such that it may be replaced with another angle bar or rotated and attached to the harp in a different orientation to allow for a different set of guide slots to be utilised.

The guide slot may comprise a continuous substantially helical groove on or in the surface of a rod. The pitch of the groove may be either constant and/or varied along the longitudinal length of the rod. The rod may include more than one groove on or in its surface. Each groove may have the same or a different pitch as the other grooves. In this way, it may be possible to have one cutting wire positioned in each groove. The spacing of these wires may be equal or unequal. In this way, the position of the cutting wire may be adjusted by rotation of the rod. Also, in the case of rods having a non-circular cross-section, such as an oval, the position of the at least one cutting wire may be moved, in use, relative to the harp and perpendicularly to the plane in which the harp sides lie, such that the distance between the wire and the frame may be varied.

At least one groove may be substantially annular and non-helical in nature.

The axial direction of at least one of the array of guide slots may be oriented substantially perpendicularly to the longitudinal axis of the positioning means. In other words, the axial direction of the slot may lie in a plane perpendicular to the longitudinal axis of the positioning means. The slot may extend radially inwardly from the outer surface of the positioning means towards the centre thereof.

However, the axial direction of at least one of the array of guide slots may be oriented at an angle to the perpendicular of the longitudinal axis of the positioning means. In other words, the axial direction of the slot may lie out of the plane perpendicular to the longitudinal axis of the positioning means.

The cutting wire positioning means may include a wire lifting means for lifting, in use, at least one cutting wire relative to the at least one of the array of guide slots in the same plane as the longitudinal axis of the cutting wire positioning means and/or perpendicularly to said axis. This may allow for the wire to be moved along and/or within the guide slot. It may lift the wire away from the frame in use. The wire lifting means may comprise a cam. Rotation of the cam may raise or lower a cutting wire either directly and/or indirectly. The wire lifting means may be manually operated, such as by the turning of a knob or handle, and/or it may include a motor for its operation. The motor may be electrically, pneumatically or hydraulically operated.

In a second aspect, the invention provides a harp for cutting solid or substantially solid products into predetermined shapes and/or sizes, comprising a frame defining an aperture, and at least one cutting wire positioning means as described in the first aspect and/or as claimed herein.

The frame may comprise a four sided structure which defines the aperture therebetween. The cutting wire positioning means may be attached to, or integral with, one or more sides. If only one cutting wire positioning means is provided on one side of the aperture then other means of attaching the cutting wires to the frame may be provided for the other side of the aperture, such as bolts.

The at least one cutting wire positioning means may be removably attachable to the frame. It may also be rotatably attachable to the frame. The harp may include at least one cutting wire. The harp may include cutting wire positioning means provided on at least two opposite sides of the aperture and on the same side of the frame. The harp may include cutting wire positioning means provided on both sides of the frame (the leading and trailing sides, in use). This may allow for a greater variety of wire arrangements relative to the frame.

The harp may include tensioning means for providing tension in the at least one cutting wire.

The guide slots may allow for varying the position, of the at least one cutting wire relative to the frame, in a parallel manner to the plane in which the frame sides lie.

In one embodiment, there is provided a harp base for use with a harp, of the type for cutting solid or substantially solid products into predetermined shapes and/or sizes, comprising more than one substantially planar face, each face having one or more arrays of receiving slots therein, for receiving arrays of cutting wires. In this way, one base may be used with a multitude of different arrays of cutting wires. The base may be rotated, to bring whichever face is required, into play.

At least one of the faces may include more than one array of receiving slots, each array having a different pitch and/or direction from the other arrays.

The harp base may have four substantially equal size faces, wherein each face may include at least one array of receiving slots. The harp base may be substantially tabular having two opposite faces of substantially equal size each of which includes one or more arrays of receiving slots.

The harp base may include two arrays of receiving slots each array oriented such that the length of the receiving slots are arranged at an angle to one another. This may allow for the cutting of the product into wedge shape pieces.

The length of the receiving slots of the two arrays may be arranged substantially perpendicular to one another. This may allow for the harp base to be turned through substantially ninety degrees in order to bring into use a different array of receiving slots.

The two arrays may be located on the same face of the base.

The harp base may be for use with a harp as described in the second aspect and/or as claimed herein.

In another embodiment, there is provided a harp base as described herein in combination with a harp as described in the second aspect and/or as claimed herein.

In a third aspect, the invention provides a method of cutting solid or substantially solid products into predetermined shapes and/or sizes, comprising the steps of providing a harp as described in the second aspect and/or as claimed herein, selecting and positioning at least one cutting wire relative to the frame, and moving the harp and/or product relative to one another to cut it.

The method may include the step of providing a harp base as described herein, and positioning the harp base relative to the harp so that an appropriate array of receiving slots is matched with the position of the at least one cutting wire.

During the relative movement of the harp and the product the at least one cutting wire may be forced through the product and into the relevant receiving slot.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a plan view of a prior art harp;
Figure 2 is a plan view of a first harp according to one embodiment of the invention;
Figure 3 is a perspective view of part of a cutting wire positioning means;
Figures 4 and 5 are perspective views of parts of alternative cutting wire positioning means;
Figure 6 is an elevational view of part of another cutting wire positioning means;
Figure 7 is an elevational view of part of a further cutting wire positioning means;
Figures 8 and 9 are elevational views of parts of further harps;
Figure 10 is a plan view of a different cutting wire positioning means;
Figure 11 is a perspective view of another cutting wire positioning means; and
Figure 12 is a perspective view of a harp base.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to different embodiments. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

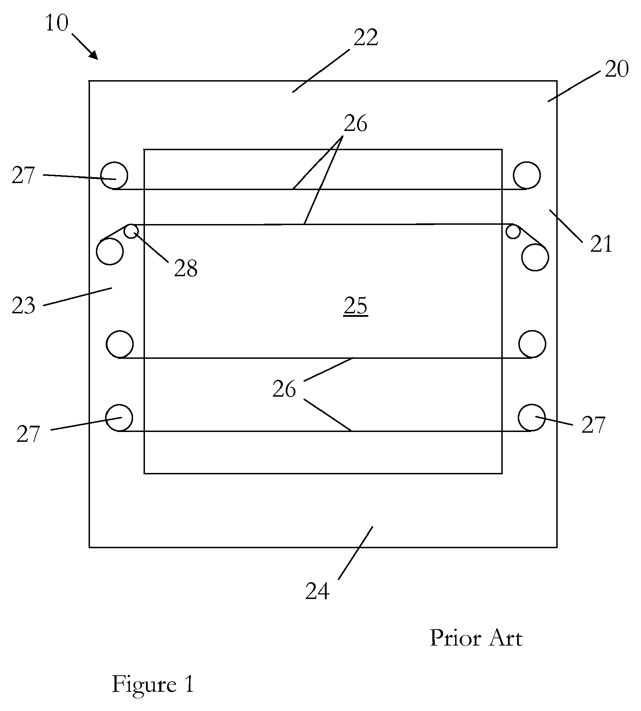

A known harp 10 is depicted in Figure 1 comprising a frame 20 having four sides 21, 22, 23, 24 defining an aperture 25. Held taut across the aperture 25 are four cutting wires 26. These wires 26 are held in place by fixing bolts 27 screwed into the frame sides 21, 23. Guide pins 28 may be included for the further arrangement of the wires 26. In use a block of cheese, or other such product, is pushed through the aperture by movement of the harp 10, or the cheese (not shown), or both.

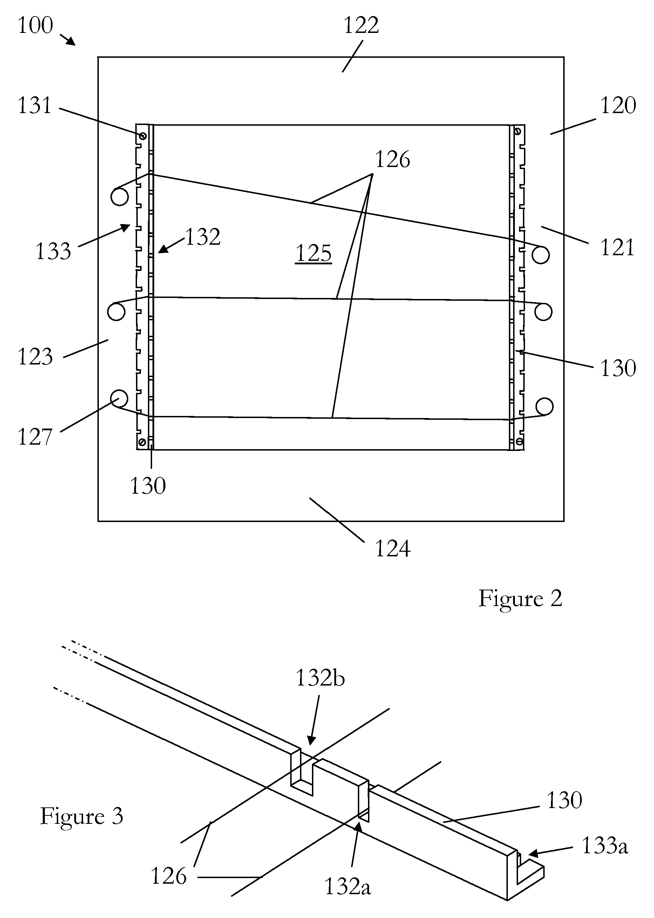

A harp 100 according to one embodiment of the invention is shown in Figure 2. It also comprises a frame 120 having four sides 121, 122, 123, 124 defining an aperture 125 in the middle thereof. Cutting wires 126 are held taut across the aperture 125 and held in place by fixing bolts 127 in a similar manner to that shown in Figure 1. However, the harp 100 includes two cutting wire positioning means 130, each arranged on opposite sides 121, 123 of the aperture 125. These cutting wire positioning means 130 are affixed to the frame sides by means of screws 131, however, other means such as quick-release means may be employed. Each cutting wire positioning means 130 comprises an "L" shape angle (refer to Figure 3) with an array of slots 132, 133 provided in each arm (the upright arm and the arm lying on the surface of, and adjacent to, the upper surface of the frame 120). The array in one arm of each "L" shape angle has a different array of slots from the other arm. By selecting the orientation of each of the "L" shape angles relative to the frame such that one of the two arms is oriented perpendicular to the plane of the frame upper surface different arrays of slots may be brought into use. The choice of slot 132 through which each wire 126 passes determines the shape and size of the resultant cut cheese portions.

Figure 3 shows a section of a cutting wire positioning means 130 in more detail having two slots 132a, 132b of differing widths on one arm and a slot 133a on the other arm.

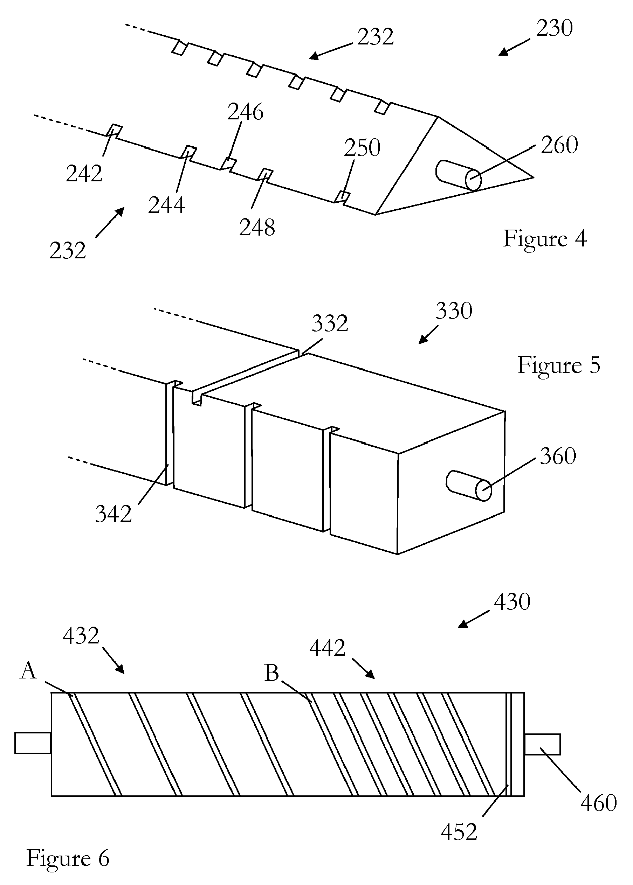

Figure 4 shows as an alternative to an "L" shape cutting wire positioning means in that it shows a portion of a triangularly shaped cutting wire positioning means 230. Slots 232, 242, 244, 246, 248, 250 are arranged at the meeting point of each adjacent pair of sides. In this way three sets of slots are available. Each cutting wire may be placed through any slot as required. The cutting wire positioning means 230 includes more than one array of slots, each array having a different spacing, or pitch, from the others. In use, cheese portions of one size may be produced using the slots referenced "242, 246" and "250", and cheese portions of a different size may be produced by using the slots referenced "242", "244", "248" and "250".

The cutting wire positioning means or "rod" or "guide member" 230 includes a pin 260 at each end (only one end shown) for rotatably fixing the member 230 to the frame of the harp. The cutting wire positioning means 230 may be rotated about the pins 260 as required to bring into use whichever set of slots is required. A locking means to prevent rotation may be included (not shown).

Other means of releasably attaching the cutting wire positioning means to a frame are contemplated but not shown.

Although the slots have been shown as only passing through the edges of the triangular shaped cutting wire positioning means 230, it is contemplated that the slots may be arranged across each flat surface, face, or longitudinal side, or a combination of the two may be possible.

Figure 5 shows another embodiment of a cutting wire positioning means 330 which is substantially rectangular in cross-section (as viewed along its longitudinal length). The slots 332, 342 are arranged across each flat surface, face, or longitudinal side. Differing arrangements of slots on each side allow for many differently shaped and sized cheese portions to be produced by selection thereof for the cutting wire(s) to pass through. A pin 360 is again provided at each end of the cutting wire positioning means 330 to allow for its rotation relative to the frame or harp.

A substantially cylindrical cutting wire positioning means 430 is shown in Figure 6. It has three discrete continuous grooves 432, 442, 452 running about its circumference. The grooves referenced "432" and "442" are helical in nature but have different pitches. The groove referenced "452" is annular and non-helical. One way in which the cutting wire positioning means may be used is for a cutting wire to be placed in each of the three separate grooves 432, 442, 452. If the wires placed in the helical grooves are located towards the left of the cutting wire positioning means (as indicated "A" and "B" in the figure) in each groove, and the cutting wire positioning means is then rotated clock-wise, when viewed from the right hand end, the wires in grooves 432, 442 will move towards the right. Due to the difference in pitch between the two grooves 432, 442 the spacing between the wires will decrease. Any wire placed in the groove referenced "452" will not move along the axial longitudinal length of the cutting wire positioning means 430 when it is rotated.

By selecting suitable locations for the cutting wire(s) to cross the cutting wire positioning means 430, by its rotation and/or by selecting which portion of groove to use, differently sized cheese portions may be possible.

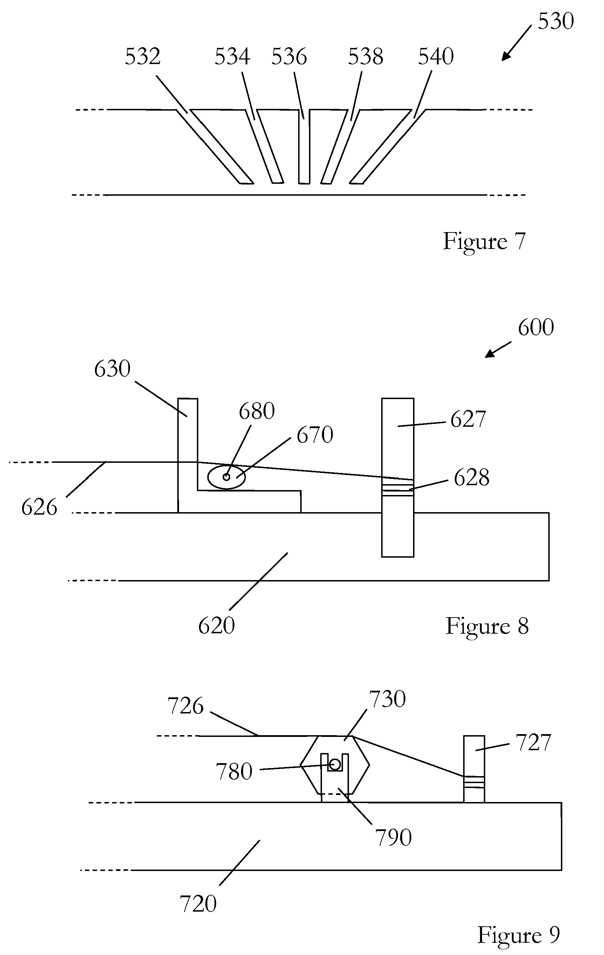

Another cutting wire positioning means 530 is shown in Figure 7. This may be the upright arm of an "L" shape cutting wire positioning means. It has five slots 532, 534, 536, 538, 540. Each slot is arranged at a different orientation to the cutting wire positioning means 530. Although these five slots are shown adjacent one another, in practice, it is of course possible to arrange more than one slot having the same orientation adjacent one another. It is also possible to provide a cutting wire positioning means 530 having any combination, number and arrangement of the five differently oriented slots. The various slots allow for the position of the cutting wire(s) relative to the cutting wire positioning means 530, and thus the frame and harp, to be selected as desired. The position of the cutting wire relative to the longitudinal axis of the positioning means 530 may be varied by raising or lowering the wire in the slot relative to the frame, in use.

In Figure 8 a cutting wire height varying means 600 for varying the height of the cutting wire(s) relative to the frame 620 is shown. In this respect, the height is the shortest distance between the wire 626 and the frame 620. The means 600 comprises a cutting wire positioning means 630 in the form of an angle similar to the embodiment shown in any of Figures 2, 3 and 7. Each wire 626 passes through a slot (not shown) and is attached to the frame 620, and tensioned, by means of a fixing bolt 627. The wire is looped 628 about the bolt 627.

The means 600 further comprises a wire movement means in the form of an oval shape rod 670 extending between the frame 620 and the wire 626. This oval rod is rotatable relative to the frame about a pin 680 provided at each end thereof. The pins 680 sit in suitable sockets (not shown) to allow rotation of the rod 670 but preventing lateral movement relative to the frame 620.

As the oval rod 670 is rotated, from the position shown in the Figure, it forces the wire upwards thus increasing the distance of the wire 626 from the frame 620. Further rotation of the rod 670 will allow the wire to move back closer to the frame 620 due to the tension therein. The oval rod 670 acts as a cam. Other shaped cams are, of course, contemplated.

The rotation of this rod 670 may be motorised or moved in any other manner.

If the slot through which wire 626 passes is oriented to the cutting wire positioning means 630 in a similar manner to any of those referenced "532", "534", "538" and "540" in Figure 7 then as its height is varied its position in a direction parallel to the longitudinal axis of the positioning means may be varied. Accordingly, the size and shape of the resultant cheese portions may be varied by rotation of the oval rod 670. There may be more than wire movement means 600 provided on the frame 620 such that individual, or a group of, wires may be moved.

In Figure 9 an elevational view of part of a harp 720 including a cutting wire positioning means 730 is shown. The cutting wire positioning means 730 has a hexagonal cross-sectional shape and includes a pin 780 at each end thereof for rotation. The cutting wire positioning means 730 is rotatably attached to the harp 720 by means of the pins 780 being held in "U" shape sockets arranged in supports 790 provided at each end of the cutting wire positioning means 730. Suitable means to retain the pins in the sockets may be provided (not shown).

The cutting wire positioning means 730 includes guide slots (not shown) across at least one of its six large side faces through which cutting wires 726 are arranged. One end of the cutting wire is tensioned by being attached to a bolt 727.

The cutting wire positioning means 730 may be rotated about the pins 780 to select a different array of guide slots provided on another of its six faces.

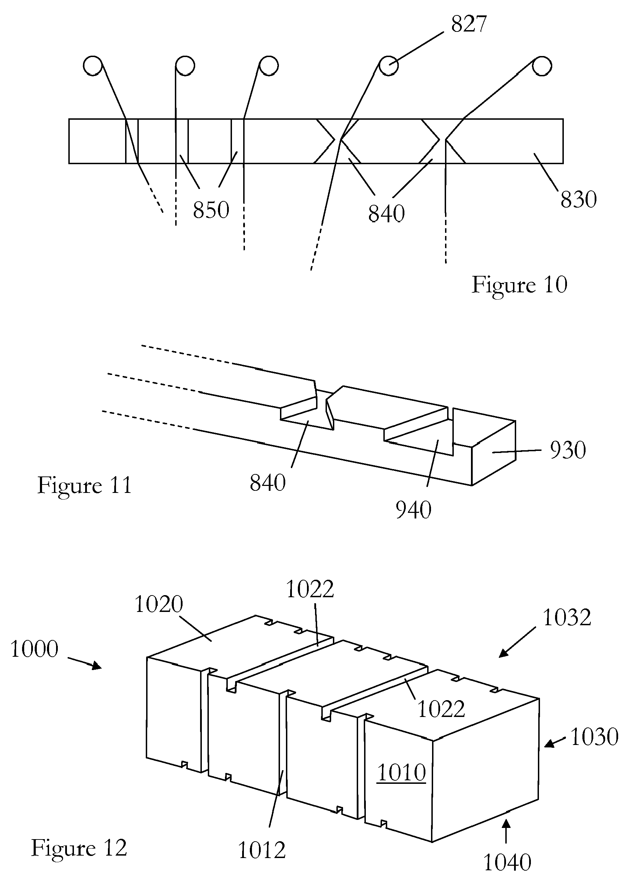

Figure 10 shows a different cutting wire positioning means 830 which comprises a bar having a rectangular cross-section and two types of guide slots 840, 850 provided in one of the large sides or surfaces of the bar. The first type of guide slot 840 comprises an "X" shape aperture. This allows for the length of a cutting wire to change direction in more than one step when entering the slot 840 from a position not immediately in front of, or adjacent, or perpendicular to it. This may help reduce wear on the wire.

The second type of guide slot 850 is a standard uniformly wide slot. This type of slot 850 may also be used to change the direction of the cutting wire as it passes therethrough.

A perspective view of a cutting wire positioning means 930 similar to the one 830 shown in Figure 10 is presented in Figure 11. This cutting wire positioning means 930 includes an "X" shape slot 840 and a "V" shape slot 940.

An example of a harp base 1000 is shown in Figure 12. The base 1000 comprises a rectangular parallelepiped member having four sides or faces 1010, 1020, 1030, 1040 of substantially the same size. Each face has an array of receiving slots 1032 provided therein/thereon. Each array allows for different arrangements of cutting wires to be used. For instance, the face referenced "1010" allows for four portions to be cut from a block having an initial size approximately equal to the size of the face 1010. By contrast, the face referenced "1020" enables three substantially equally sized portions to be produced. The face referenced "1030" allows for nine portions to be cut since the slots referenced "1022" on the upper shown face 1020 also extend across the rear shown face 1030. Finally, the face referenced "1040" (the lowermost face shown) enables six substantially equal size portions to be cut since the central slot referenced "1012" on the front shown face 1010 also extends across the lower face 1040.

Other shaped harp bases (not shown) are possible such as triangular.

With regard to the term "slot" used herein, it is to be understood that it includes not only a slot recessed into a member but also a surface mounted slot, possibly created by arranging two sides arms on a surface. It also encompasses a groove formed as part of a screw thread, on a threaded bar for instance. Furthermore, it encompasses a slot formed between two collars or nuts, and a nut with a groove, some, or all, of which may be rotatably attachable to a bar which may be at least partially threaded.

## Claims

1. Cutting wire positioning means (130) of the type used as part of a harp (!00) for cutting solid or substantially solid products into predetermined shapes and/or sizes, the positioning means for allowing the position of at least one cutting wire (126) relative to the harp to be varied, the positioning means having at least two faces, wherein each of the at least two faces include an array of guide slots (132, 133) through which the at least one cutting wire is passable, the position of the positioning means relative to the harp being adjustable such that each face is selectable for use, in turn, with the at least one cutting wire.

2. The cutting wire positioning means of claim 1, for use with cutting wires which are substantially stationary relative to the harp, in use.

3. The cutting wire positioning means of any preceding claim, wherein the positioning means is rotatable relative to the harp.

4. The cutting wire positioning means of any preceding claim, wherein the positioning means is a rod (230, 330, 430, 730).

5. The cutting wire positioning means of claim 4, wherein the rod (430) is substantially cylindrical.

6. The cutting wire positioning means of either one of claims 4 and 5, wherein the guide slot comprises a continuous substantially helical groove (432, 442) on or in the surface of the rod (430).

7. The cutting wire positioning means of claim 6, wherein the pitch of the groove is either constant and/or varied along the longitudinal length of the rod.

8. The cutting wire positioning means of any one of claims 4 to 7, wherein the rod includes more than one continuous groove on or in its surface.

9. The cutting wire positioning means of any one of claims 1 to 3, wherein the axial direction of at least one of the array of guide slots (532, 534, 538, 540) is oriented at an angle to the perpendicular of the longitudinal axis of the positioning means.

10. The cutting wire positioning means of any preceding claim, including a wire lifting means (600) for lifting, in use, at least one cutting wire (626) relative to at least one of the array of guide slots in the same plane as the longitudinal axis of the cutting wire positioning means (630) and/or perpendicularly to said plane.

11. The cutting wire positioning means of claim 10, wherein the wire lifting means comprises a cam (670).

12. A harp (100) for cutting solid or substantially solid products into predetermined shapes and/or sizes, comprising a frame (120) defining an aperture (125), and at least one cutting wire positioning means (130) according to any one of claims 1 to 11.

13. The harp of claim 12, wherein the at least one positioning means is removably attachable to the frame.

14. The harp of either one of claims 12 and 13, wherein the harp either includes positioning means provided on at least two opposite sides of the aperture and on the same side of the frame, or on at least two opposite sides of the aperture and on both sides of the frame.

15. A method of cutting solid or substantially solid products into predetermined shapes and/or sizes, comprising the steps of providing a harp (100) according to either one of claims 12 and 13, selecting and positioning at least one cutting wire (126) relative to the frame (120), and moving the harp and/or product relative to one another to cut it.
